# FASCICULE DE BREVET EUROPEEN

(11) **EP 2 565 104 B1**
(45) Date de publication et mention de la délivrance du brevet: **02.03.2016**
(21) Numéro de dépôt: 12182136.7
(22) Date de dépôt: 29.08.2012
(51) Int. Cl.: B62D 3/12

(54) **Système de direction à crémaillère pour véhicule automobile**
Zahnstangenlenkung für ein Kraftfahrzeug
Rack-and-pinion steering system for a vehicle

(30) Priorité: 30.08.2011 FR 1157639
(43) Date de publication de la demande: 06.03.2013
(73) Titulaire: Jtekt Europe, 69540 Irigny (FR)
(72) Inventeur: Viguier, Olivier, 69890 LA TOUR DE SALVAGNY (FR); Filipe, Charly, 69007 LYON (FR)
(74) Mandataire: Chevalier, Renaud Philippe

(56) Documents cités:
- EP-A1- 1 884 446
- EP-A2- 1 386 822
- DE-A1- 19 956 839
- JP-A- 2002 274 396
- JP-A- 2006 123 643
- US-A- 4 218 933
- US-B1- 6 435 050

## Description

La présente invention concerne les systèmes de direction à crémaillère pour véhicules automobiles.

Cette invention s'intéresse, plus particulièrement, au montage et au guidage de la crémaillère dans un tel système de direction.

Dans un système de direction à crémaillère de véhicule automobile, un pignon de direction est lié en rotation avec une colonne de direction, manoeuvrée à l'aide du volant de conduite du véhicule, le plus souvent avec l'aide d'une assistance hydraulique ou électrique. Le pignon de direction est en prise avec la crémaillère, montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction au pignon, est convertie en un mouvement de translation de la crémaillère qui, par l'intermédiaire des biellettes, provoque l'orientation des roues directrices pour un braquage à droite ou pour un braquage à gauche.

La crémaillère est habituellement appliquée de façon permanente contre le pignon par un dispositif dit "poussoir", qui agit élastiquement sur le dos de la crémaillère dans la région du pignon pour presser fortement la denture de la crémaillère contre le pignon. Grâce au poussoir, les défauts d'engrènement de la crémaillère avec le pignon sont compensés, et ce poussoir assure aussi le guidage de la crémaillère, en contrôlant l'effort de coulissement de la crémaillère dans le carter de direction.

Dans sa forme de réalisation la plus habituelle, le dispositif de poussoir comprend un poussoir proprement dit, qui est une pièce rigide montée mobile en translation suivant une direction sensiblement perpendiculaire à l'axe longitudinal de la crémaillère, dans une partie de carter cylindrique, cette pièce étant sollicitée vers le dos de la crémaillère par des moyens élastiques, de manière à s'appuyer sur le dos de la crémaillère par une partie terminale de forme adaptée. Les moyens élastiques peuvent être constitués par un ressort hélicoïdal seul ou par une rondelle élastique métallique ou en élastomère, ou par une combinaison de tels organes élastiques. Ces moyens élastiques prennent appui sous une vis de réglage, qui permet un réglage du recul du poussoir et qui matérialise la butée de fin de course du poussoir.

L'ensemble mécanique constitué par la crémaillère, par le pignon et par le dispositif de poussoir est sujet à des chocs, générateurs de bruits, qui se produisent notamment lors des manoeuvres de stationnement sous une excitation sinusoïdale du volant. Ces chocs se manifestent plus particulièrement pour une excitation dont la fréquence est comprise entre 1Hz et 5Hz, et dont l'amplitude est comprise entre ± 10° et ± 60° au volant.

Les chocs ici considérés, sources de bruits, se produisent :
- dans la zone de contact des dentures de la crémaillère et du pignon,
- aux points de contact du poussoir proprement dit avec la paroi interne de la partie de carter cylindrique correspondante, en cas de basculement du poussoir, et
- dans la zone de contact entre le poussoir proprement dit et la vis de réglage, en cas de recul du poussoir jusqu'à sa butée contre ladite vis.

On connaît par ailleurs, par les documents EP-1 884 446, JP-2002 274396, et US-6 435 050 des systèmes de direction comprenant une bague pourvue de moyens d'amortissement et traversée par la crémaillère.

La présente invention a pour but de réduire les chocs, et les bruits en résultant, dans les zones de contact ou aux points de contact précédemment mentionnés, en vue d'un fonctionnement amorti et silencieux du système de direction, en particulier lors des manoeuvres de stationnement mais aussi sous d'autres excitations.

A cet effet, l'invention a pour objet un système de direction à crémaillère pour véhicule automobile, avec une crémaillère montée coulissante en direction longitudinale, un pignon de direction en prise avec la crémaillère, et un dispositif de poussoir appliquant élastiquement la crémaillère contre le pignon de direction, ce système de direction étant essentiellement caractérisé par le fait qu'il comporte au moins une bague fixe avec moyens d'amortissement, montée autour de la crémaillère, la bague présentant intérieurement des portées excentrées en contact frottant avec la crémaillère.

L'excentration des portées de cette bague combinée à l'action des moyens d'amortissement, a pour effet de presser la crémaillère contre le poussoir, le sens et la valeur de cette excentration étant à définir en fonction de chaque cas d'application.

Les moyens d'amortissement peuvent être constitués par un élément amortissant de forme annulaire, placé à la périphérie de la bague. Ainsi, l'élément amortissant est réalisable sous la forme d'un simple joint torique, monté dans une gorge annulaire creusée à la périphérie de la bague. Cet élément amortissant est aussi réalisable sous la forme d'un surmoulage en matériau amortissant, par exemple en silicone, entourant la bague. La compression dissymétrique dudit élément amortissant, due à l'excentration des portées intérieures de la bague, provoque sur la crémaillère des efforts dont la résultante est notamment orientée de manière opposée à l'effort engendré par le poussoir.

Selon le sens et la valeur de l'excentration, des effets divers peuvent être obtenus.

Dans un premier cas typique, les efforts produits par la bague sur la crémaillère augmentent avec le recul du poussoir, et la résultante de ces efforts est dirigée à l'opposé du poussoir, lors d'un chargement du dispositif de poussoir dû aux efforts exercés par les biellettes ou par la denture. On obtient alors une limitation de la vitesse de descente de la crémaillère vers le fond du dispositif de poussoir.

Dans un deuxième cas typique, correspondant à une excentration orientée à l'opposé du cas précédent, les efforts produits par la bague sur la crémaillère diminuent avec le recul du poussoir, et la résultante de ces efforts est dirigée vers le poussoir. On obtient alors une limitation de la vitesse de remontée de la crémaillère vers le pignon, après un chargement important du dispositif de poussoir dû aux efforts exercés par les biellettes sur la crémaillère.

Dans les deux cas, les efforts produits par la bague ayant une composante radiale, ces efforts limitent aussi les basculements du poussoir.

Dans un mode de réalisation, la bague comporte deux portées intérieures excentrées, symétriques l'une de l'autre, qui sont en contact frottant avec la crémaillère dans des zones opposées de préférence situées, vues en section, entre le pied des dents de la crémaillère et l'axe longitudinal de cette crémaillère.

Grâce à ces portées excentrées, la bague permet de réduire considérablement les chocs entre dentures et les chocs du poussoir contre la partie de carter correspondante, ainsi que les bruits engendrés par ces chocs.

Avantageusement, la bague comporte encore une troisième portée, avec ou sans excentration, dont la zone de contact frottant avec la crémaillère se situe, vue en section, à l'opposé des dents de cette crémaillère. La troisième portée, ainsi localisée, permet de limiter le choc du poussoir contre la vis de réglage, en cas de recul à fond du poussoir. Une telle bague a ainsi pour avantage de reprendre l'ensemble des chocs envisagés plus haut, donc de limiter les bruits de manière optimale.

Bien entendu, l'action de la bague ne doit pas contrarier le fonctionnement du poussoir, ce dernier devant toujours presser convenablement la crémaillère contre le pignon. Ceci est obtenu par un choix convenable de la raideur du joint torique ou du matériau amortissant surmoulé.

De plus, cette bague doit être placée le plus loin possible du poussoir, pour limiter autant que possible le déplacement de la crémaillère qu'elle peut provoquer.

Ainsi, la bague est à placer, idéalement, vers une extrémité de carter de direction dans lequel est montée coulissante la crémaillère.

Dans tous les cas, la bague est à indexer en rotation dans le carter de direction, par exemple par un ergot saillant à la périphérie de cette bague, de manière à se trouver parfaitement positionnée angulairement par rapport à la denture de la crémaillère.

Si l'excentration des portées de la bague est suffisante, la bague restera toujours en contact frottant sur la crémaillère, malgré l'usure de cette bague dans le temps, et ainsi la bague conservera son efficacité contre les chocs et les bruits.

Les portées de la bague, quel qu'en soit le nombre, doivent être optimisées de manière à réduire les surfaces en contact et ainsi les frottements, lors du coulissement de la crémaillère.

Selon une disposition complémentaire avantageuse, la bague comporte une fente radiale traversante ou une pluralité de fentes radiales non traversantes, ce qui permet de compenser l'usure de cette bague, en combinaison avec l'action du joint torique ou du matériau amortissant entourant ladite bague.

De toute façon, l'invention sera mieux comprise à l'aide de la description qui suit, en référence au dessin schématique annexé représentant à titre d'exemples, quelques formes de réalisation de ce système de direction à crémaillère et en particulier de sa bague.
Figure 1 est une vue d'ensemble d'un système de direction à crémaillère, recevant au moins une telle bague,
Figure 2 est une vue en coupe passant le dispositif de poussoir, identifiant certaines zones de chocs,
Figure 3 est un schéma identifiant d'autres zones de chocs, toujours au niveau du poussoir,
Figure 4 est une vue en perspective d'un premier mode de réalisation de la bague à portées excentrées,
Figure 5 est une vue de face de la bague de la figure 4,
Figure 6 est une vue en coupe passant par l'axe de cette bague,
Figure 7 est un schéma illustrant la localisation des portées excentrées de la bague, relativement à la crémaillère,
Figures 8, 9 et 10 sont des schémas illustrant le mode d'action de la bague, pour diverses positions du poussoir,
Figure 11 est un schéma d'un autre mode de réalisation de la bague, avec trois portées,
Figure 12 est une vue en perspective d'une bague selon cet autre mode de réalisation,
Figure 13 est une vue de face de la bague de la figure 12,
Figure 14 est une vue de côté de la bague des figures 12 et 13,
Figure 15 montre une bague à trois portées, avec un premier sens d'excentration,
Figures 16, 17 et 18 sont des schémas illustrant le mode d'action de la bague de la figure 15, pour diverses positions du poussoir,
Figure 19 montre une bague à trois portées, avec un autre sens d'excentration,
Figures 20, 21 et 22 sont des schémas illustrant le mode d'action de la bague de la figure 19, pour diverses positions du poussoir,
Figure 23 est un schéma d'un dernier mode de réalisation de la bague.

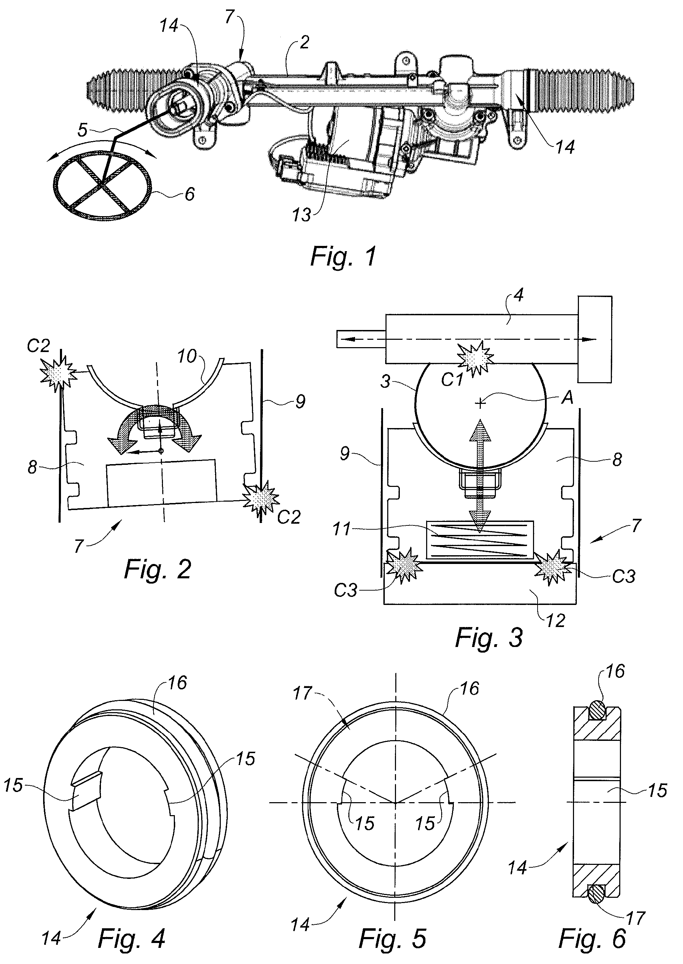

En se référant aux figures 1 et 2, un système de direction comprend, montée coulissante dans un carter de direction 2, une crémaillère 3 dont la denture est en prise avec un pignon de direction 4. Le pignon de direction 4 est lié en rotation avec une colonne de direction 5, manoeuvrée à l'aide d'un volant de conduite 6. La crémaillère 3 est appliquée élastiquement contre le pignon de direction 4 par un dispositif de poussoir 7.

Le dispositif de poussoir 7 comprend un poussoir 8 proprement dit, monté coulissant dans une partie de carter 9 cylindrique, d'axe sensiblement perpendiculaire à l'axe longitudinal A de la crémaillère 3. Le poussoir 8 présente une partie terminale de profil concave 10 (voir aussi figure 3) prévue pour s'appuyer contre le dos de la crémaillère 3. Un ressort hélicoïdal 11 est comprimé entre le poussoir 8 et une vis de réglage 12, vissée à l'extrémité extérieure de la partie de carter 9.

Dans l'exemple illustré par la figure 1, il s'agit d'une direction assistée électrique, qui comprend encore un moteur électrique d'assistance 13, lequel agit ici sur la crémaillère par l'intermédiaire d'un second pignon.

En se référant à la figure 3, une première zone de choc, source de bruit, est la zone C1 de contact des dentures de la crémaillère 3 et du pignon de direction 4.

Comme l'illustre la figure 2, d'autres zones de choc, source de bruit, sont les deux points de contact C2 du poussoir 8 proprement dit avec la paroi interne de la partie de carter 9 cylindrique, lors d'un mouvement de basculement de ce poussoir 8.

En se référant de nouveau à la figure 3, une dernière zone de choc, source de bruit, est la zone de contact C3 entre le poussoir 8 proprement dit et la vis de réglage 12, contact qui se produit en cas de recul à fond du poussoir 8, la compression du ressort 11 étant alors maximale.

Dans le but de limiter ces chocs et de réduire les bruits en résultant, l'invention propose le positionnement d'une bague 14 spécifique, au niveau du dispositif de poussoir 7 ou de préférence à l'extrémité du carter de direction 2 la plus éloignée du dispositif de poussoir 7.

Dans un premier mode de réalisation, montré sur les figures 4 à 6, la bague 14 comporte intérieurement deux portées 15 arquées, symétriques l'une de l'autre, et présentant une excentration par rapport à la périphérie de cette bague 14.

A la périphérie de la bague 14, il est prévu, en tant qu'élément amortissant, un joint torique 16 monté dans une gorge annulaire 17 creusée dans la bague 14.

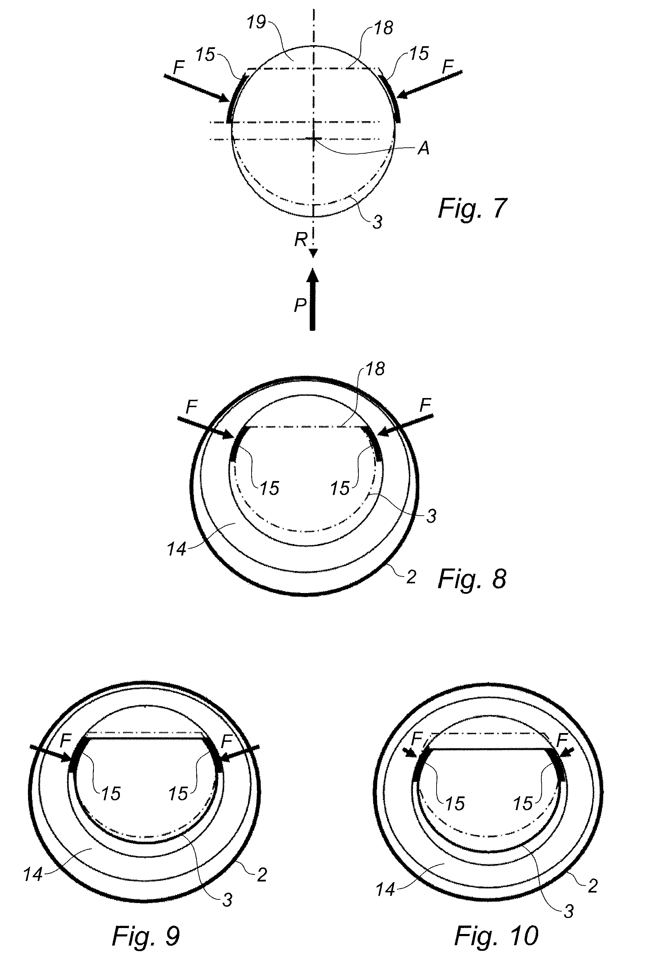

La bague 14 est montée et immobilisée à l'intérieur du carter de direction 2, en particulier à l'extrémité de ce carter, de manière à se trouver traversée par la crémaillère 3. Plus particulièrement, comme l'illustre la figure 7, la bague 14 est indexée en rotation dans le carter de direction 2, de telle manière que ses deux portées intérieures 15 excentrées soient en contact frottant avec la crémaillère 3, dans des zones opposées de celle-ci situées entre, d'une part, le pied 18 des dents 19 de cette crémaillère 3 et, d'autre part, l'axe longitudinal A de ladite crémaillère 3.

En raison de l'excentration des portées intérieures 15 de la bague 14, ces portées 15 exercent sur la crémaillère 3 des efforts F symétriques, dont la résultante R est opposée à l'effort P du dispositif de poussoir 7.

Par ces efforts F, la bague 14 limite donc la vitesse de retour de la crémaillère 3 sur le pignon de direction 4, après une sollicitation importante du dispositif de poussoir 7 due aux efforts exercés par les biellettes de direction sur la crémaillère 3. Les efforts F étant orientés de manière sensiblement radiale, ceux-ci limitent aussi les basculements du poussoir 8 proprement dit. Ainsi, les chocs dans les zones C1 et C2, précédemment identifiées, se trouvent considérablement réduits, de même que les bruits engendrés par ces chocs.

En réalité, comme l'illustrent les schémas des figures 8 à 10, les efforts F ne sont pas invariables mais subissent une évolution, dans leur amplitude, selon le recul plus ou moins important du poussoir. La figure 8 illustre la position initiale ou nominale de la crémaillère 3, définie relativement au carter de direction 2 (position également indiquée en traits mixtes sur les figures 9 et 10). La figure 9 illustre la situation pour un recul moyen du poussoir. La figure 10 illustre la situation pour un recul maximum du poussoir, recul qui doit rester inférieur à l'excentration des portées 15 de la bague 14.

La raideur de l'élément amortissant, ici le joint torique 16, est ajustée de manière à ne pas contrarier le fonctionnement du dispositif de poussoir 7, lequel doit toujours bien appliquer la crémaillère 3 sur le pignon de direction 4. Dans la mesure où l'amortissement est réalisé par le joint torique 16, une attention particulière doit être portée au choix du taux de remplissage de la gorge annulaire 17 de la bague 14 pour le dimensionnement de ce joint torique 16.

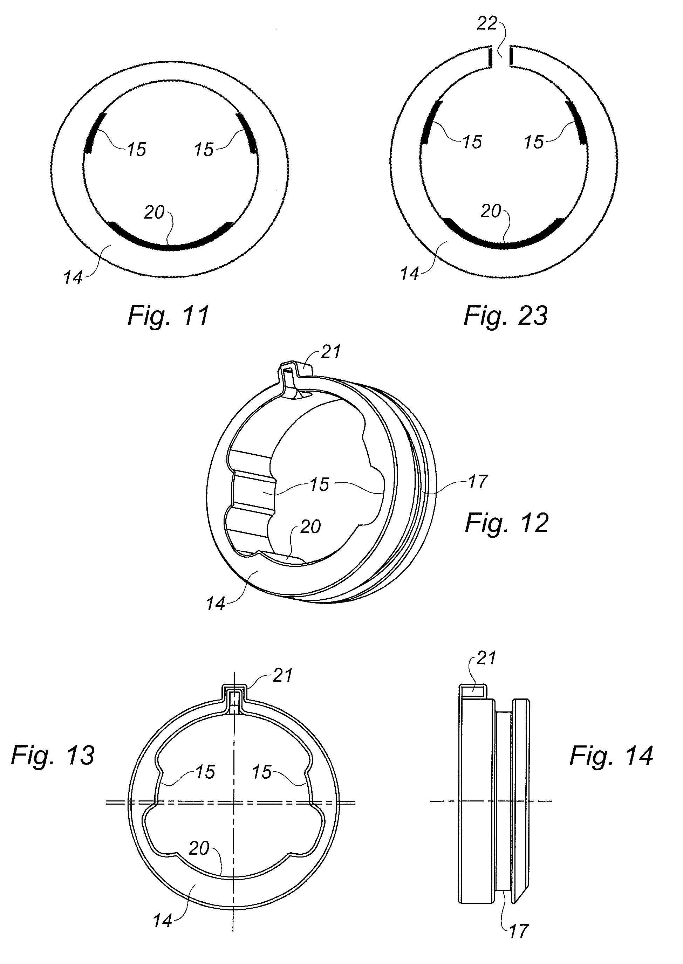

La figure 11 montre schématiquement un autre mode de réalisation de la bague 14. Celle-ci comporte encore deux portées intérieures 15 excentrées, auxquelles s'ajoute ici une troisième portée 20 avec ou sans excentration par rapport à l'axe longitudinal A de la crémaillère 3.

Les figures 12 à 14 montrent un exemple concret de réalisation d'une telle bague 14 avec troisième portée 20, ici excentrée de manière à presser la crémaillère contre le pignon de direction. Ces figures montrent clairement la présence, à la périphérie de la bague 14, de la gorge annulaire 17 recevant le joint torique amortissant, ainsi que d'un ergot 21 saillant radialement et servant au positionnement angulaire de ladite bague 14 dans le carter de direction.

Grâce à sa troisième portée 20, qui se situe à l'opposé des dents 19 de la crémaillère 3, la bague 14 limite aussi le choc qui se produit dans la zone C3 précédemment identifiée, en cas de recul maximum du poussoir 8. L'ajustement de l'excentration de cette troisième portée 20 par rapport à l'axe longitudinal A de la crémaillère 3 permet d'ajuster l'amortissement du choc dans la zone C3.

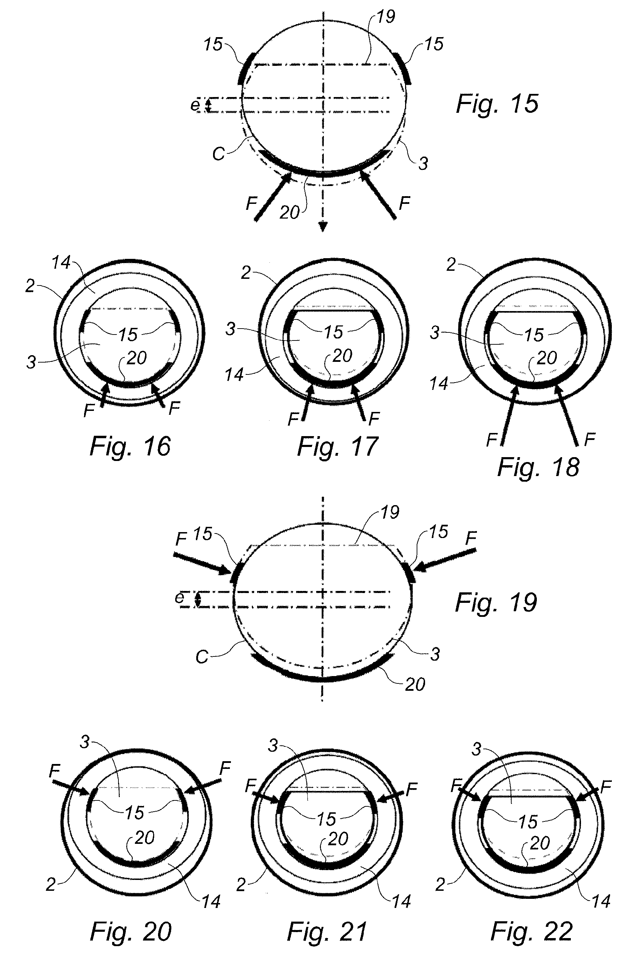

Plus particulièrement, la figure 15 illustre le cas où les trois portées sont situées sur un même cercle C excentré du côté situé à l'opposé des dents 19 de la crémaillère 3, l'excentration étant indiquée en e. Dans ce cas, les efforts produits par la bague 14 sur la crémaillère 3 augmentent avec le recul du poussoir, et l'on obtient une limitation de la vitesse de descente de la crémaillère 3 vers le fond du dispositif de poussoir. En particulier, l'excentration de la troisième portée 20 a pour effet de presser la crémaillère 3 contre le pignon. La raideur du joint torique et sa compression dissymétrique, due à l'excentration des portées, provoque sur la crémaillère les efforts indiqués parles flèches F. Les schémas de figures 16, 17 et 18 illustrent l'évolution de ces efforts F, en fonction de l'augmentation du recul du poussoir.

La figure 19 illustre le cas où les trois portées sont situées sur un même cercle C excentré du côté des dents 19 de la crémaillère 3, l'excentration étant ici encore indiquée en e. Dans ce cas, les efforts produits par la bague 14 sur la crémaillère 3 diminuent avec le recul du poussoir, et l'on obtient une limitation de la vitesse de remontée de la crémaillère 3 vers le pignon. L'excentration de la troisième portée 20 a ici pour effet de presser la crémaillère 3 contre le poussoir, par les efforts indiqués en F. Les schémas des figures 20, 21 et 22 illustrent l'évolution de ces efforts, en fonction de l'augmentation du recul du poussoir.

Comme l'illustre enfin la figure 23, la bague 14 peut comporter une fente radiale traversante 22, ici située dans une zone diamétralement opposée à la troisième portée 20.

Grâce à une telle fente 22, on obtient un contrôle et une compensation de l'usure de la bague 14.

Comme il va de soi, l'invention ne se limite pas aux seules formes de réalisation décrites ci-dessus, à titre d'exemples ; elle en embrasse, au contraire, toutes les variantes respectant le même principe. C'est ainsi, notamment, que l'on ne s'écarterait pas du cadre de l'invention :
- en remplaçant le joint torique par tout élément amortisseur équivalent, en particulier par un surmoulage en matériau amortissant,
- en modifiant la position des portées intérieures de la bague, tant sur cette bague que par rapport à la crémaillère, de manière à adapter l'action de ladite bague, en particulier le sens de cette action,
- en remplaçant la fente radiale traversante de la bague par une pluralité de fentes radiales non traversantes,
- en positionnant la bague en un endroit différent,
- en appliquant l'invention à des systèmes de direction de tous types, manuels ou assistés, avec assistance hydraulique ou électrique pouvant agir en tout point du système de direction.

## Revendications

1. Système de direction à crémaillère pour véhicule automobile, avec une crémaillère (3) montée coulissante selon sa direction longitudinale, un pignon de direction (4) en prise avec la crémaillère (3), un dispositif de poussoir (7) appliquant élastiquement la crémaillère (3) contre le pignon de direction (4), ledit système de direction comportant au moins une bague (14) fixe traversée par la crémaillère (3), et avec moyens d'amortissement (16) constitués par un élément amortissant (16) de forme annulaire, placé à la périphérie de la bague (14), ladite bague (14) étant montée autour de la crémaillère (3) et présentant intérieurement des portées excentrées (15) en contact frottant avec la crémaillère (3), ledit système de direction étant **caractérisé en ce que** la bague (14) comporte deux portées intérieures (15) excentrées par rapport à la périphérie de ladite bague (14), symétriques l'une de l'autre, qui sont en contact frottant avec la crémaillère (3) dans des zones opposées situées, vues en section, entre le pied (18) des dents (19) de la crémaillère (3), et l'axe longitudinal (A) de cette crémaillère (3).

2. Système de direction selon la revendication 1, **caractérisé en ce que** l'élément amortissant est réalisé sous la forme d'un joint torique (16), monté dans une gorge annulaire (17) creusée à la périphérie de la bague (14).

3. Système de direction selon la revendication 1, **caractérisé en ce que** l'élément amortissant est réalisé sous la forme d'un surmoulage en matériau amortissant, par exemple en silicone, entourant la bague (14).

4. Système de direction selon l'une des revendications 1 à 3, **caractérisé en ce que** la bague (14) comporte une troisième portée (20), avec ou sans excentration, dont la zone de contact frottant avec la crémaillère (3) se situe, vue en section, à l'opposé des dents (19) de cette crémaillère (3).

5. Système de direction selon l'une des revendications 1 à 4, **caractérisé en ce que** les portées (15, 20) sont situées sur un même cercle (C) excentré du côté situé à l'opposé des dents (19) de la crémaillère (3).

6. Système de direction selon l'une des revendications 1 à 4, **caractérisé en ce que** les portées (15, 20) sont situées sur un même cercle (C) excentré du côté des dents (19) de la crémaillère (3).

7. Système de direction selon l'une des revendications 1 à 6, **caractérisé en ce que** la bague (14) comporte une fente radiale traversante (22) ou une pluralité de fentes radiales non traversantes.

8. Système de direction selon l'une des revendications 1 à 7, **caractérisé en ce que** la bague (14) est placée vers une extrémité du carter de direction (2) dans lequel est montée coulissante la crémaillère (3).

9. Système de direction selon la revendication 8, **caractérisé en ce que** la bague (14) est indexée en rotation dans le carter de direction (2), par exemple par un ergot (21) saillant à la périphérie de cette bague (14), de manière à se trouver positionnée angulairement par rapport à la denture de la crémaillère (3).

10. Système de direction selon la revendication 8 ou 9, **caractérisé en ce que** la bague (14) est intégrée à un limiteur de course de la crémaillère (3), monté à l'extrémité du carter de direction (2).

## Patentansprüche

1. Zahnstangen-Lenksystem für ein Kraftfahrzeug, mit einer Zahnstange (3), die in ihre Längsrichtung verschiebbar montiert ist, einem Lenkritzel (4) in Eingriff mit der Zahnstange (3), einer Druckvorrichtung (7), welche die Zahnstange (3) elastisch an das Lenkritzel (4) anlegt, wobei das besagte Lenksystem zumindest einen festen Ring (14) umfasst, durch den die Zahnstange (3) hindurchführt, und mit Dämpfungsmitteln (16), die durch ein ringförmiges Dämpferelement (16) gebildet werden, das am Umkreis des Ringes (14) angebracht ist, wobei der besagte Ring (14) um die Zahnstange (3) montiert ist und im Inneren exzentrische Auflageflächen (15) aufweist, die im Reibungskontakt mit der Zahnstange (3) stehen, wobei das besagte Lenksystem **dadurch gekennzeichnet ist, dass** der Ring (14) zwei innere exzentrische Auflageflächen (15) im Verhältnis zum Umkreis des besagten Ringes (14) umfasst, die zueinander symmetrisch sind, und die in gegenüberliegenden Bereichen im Reibungskontakt mit der Zahnstange (3) stehen, die sich im Querschnitt gesehen, zwischen dem Fuß (18) der Zähne (19) der Zahnstange (3) und der Längsachse (A) dieser Zahnstange (3) befinden.

2. Lenksystem nach Anspruch 1, **dadurch gekennzeichnet, dass** das Dämpferelement in Form eines O-Rings (16) ausgeführt ist, der in einer Ringnut (17) montiert ist, die in den Umkreis des Ringes (14) eingearbeitet ist.

3. Lenksystem nach Anspruch 1, **dadurch gekennzeichnet, dass** das Dämpferelement in Form einer Überformung aus einem dämpfenden Material, beispielsweise aus Silikon ausgeführt ist, die den Ring (14) umgibt.

4. Lenksystem nach einem der Ansprüche 1 bis 3, **dadurch gekennzeichnet, dass** der Ring (14) eine dritte exzentrische oder nicht exzentrische Auflagefläche (20) umfasst, deren Reibungskontaktbereich mit der Zahnstange (3) sich im Querschnitt gesehen, gegenüber den Zähnen (19) dieser Zahnstange (3) befindet.

5. Lenksystem nach einem der Ansprüche 1 bis 4, **dadurch gekennzeichnet, dass** sich die Auflageflächen (15, 20) auf einem selben exzentrischen Kreis (C) auf einer Seite befinden, die sich gegenüber den Zähnen (19) der Zahnstange (3) befindet.

6. Lenksystem nach einem der Ansprüche 1 bis 4, **dadurch gekennzeichnet, dass** sich die Auflageflächen (15, 20) auf einem selben exzentrischen Kreis (C) auf der Seite der Zähne (19) der Zahnstange (3) befinden.

7. Lenksystem nach einem der Ansprüche 1 bis 6, **dadurch gekennzeichnet, dass** der Ring (14) einen durchgehenden radialen Spalt (22) oder eine Vielzahl von nicht durchgehenden radialen Spalten umfasst.

8. Lenksystem nach einem der Ansprüche 1 bis 7, **dadurch gekennzeichnet, dass** der Ring (14) zum Ende des Lenkgehäuses (2) hin eingesetzt ist, in dem die Zahnstange (3) verschiebbar montiert ist.

9. Lenksystem nach Anspruch 8, **dadurch gekennzeichnet, dass** der Ring (14) beim Drehen im Lenkgehäuse (2) beispielsweise durch eine Nase (21) indexiert ist, die am Umkreis dieses Ringes (14) übersteht, um im Verhältnis zur Verzahnung der Zahnstange (3) im Winkel positioniert zu werden.

10. Lenksystem nach Anspruch 8 oder 9, **dadurch gekennzeichnet, dass** der Ring in einen Wegbegrenzer der Zahnstange (3) integriert ist, der am Ende des Lenkgehäuses (2) montiert ist.

## Claims

1. A rack steering system for a motor vehicle, with a rack (3) slidably mounted along its longitudinal direction, a steering pinion (4) in engagement with the rack (3), a pusher device (7) elastically applying the rack (3) against the steering pinion (4), said steering system including at least one stationary ring (14) crossed by the rack (3), and with damping means (16) composed of an annular-shaped damping element (16), placed at the periphery of the ring (14), said ring (14) being mounted around the rack (3) and having internally eccentric bearings (15) in frictional contact with the rack (3), said steering system being **characterized in that** the ring (14) includes two eccentric inner bearings (15) relative to the periphery of said ring (14), symmetrical to one another, which are in frictional contact with the rack (3) in opposite areas located, in sectional view, between the foot (18) of the teeth (19) of the rack (3), and the longitudinal axis (A) of this rack (3).

2. The steering system according to claim 1, **characterized in that** the damping element is made in the form of an O-ring (16), mounted in an annular groove (17) hollowed at the periphery of the ring (14).

3. The steering system according to claim 1, **characterized in that** the damping element is made in the form of an overmolding made of damping material, for example of silicone, surrounding the ring (14).

4. The steering system according to any of claims 1 to 3, **characterized in that** the ring (14) includes a third bearing (20), eccentric or not, whose frictional contact area with the rack (3) is located, in sectional view, opposite to the teeth (19) of this rack (3).

5. The steering system according to any of claims 1 to 4, **characterized in that** the bearings (15, 20) are located on the same circle (C) eccentric on the side located opposite to the teeth (19) of the rack (3).

6. The steering system according to any of claims 1 to 4, **characterized in that** the bearings (15, 20) are located on the same circle (C) eccentric on the side of the rack (3) teeth (19).

7. The steering system according to any of claims 1 to 6, **characterized in that** the ring (14) includes a through radial slot (22) or a plurality of non-through radial slots.

8. The steering system according to any of claims 1 to 7, **characterized in that** the ring (14) is located towards one end of the steering casing (2) in which the rack (3) is slidably mounted.

9. The steering system according to claim 8, **characterized in that** the ring (14) is indexed in rotation in the steering casing (2), for example a lug (21) protruding at the periphery of this ring (14) so as to be angularly positioned relative to the toothing of the rack (3).

10. The steering system according to claim 8 or 9, **characterized in that** the ring (14) is embedded in a stroke limiter of the rack (3), mounted at the end of the steering casing (2).
